# EUROPÄISCHE PATENTSCHRIFT

(11) **EP 2 412 548 B1**
(45) Veröffentlichungstag und Bekanntmachung des Hinweises auf die Patenterteilung: **08.07.2015**
(21) Anmeldenummer: 11164904.2
(22) Anmeldetag: 05.05.2011
(51) Int. Cl.: B60C 11/11

(54) **Fahrzeugluftreifen**
Pneumatic tyre for a vehicle
Pneu de véhicule

(30) Priorität: 29.07.2010 DE 102010036725
(43) Veröffentlichungstag der Anmeldung: 01.02.2012
(73) Patentinhaber: Continental Reifen Deutschland GmbH, 30165 Hannover (DE)
(72) Erfinder: Behr, Ulrich, 30169 Hannover (DE); Gerhardt, Joachim, 30890 Barsinghausen (DE); Rittweger, Stefan, 30163 Hannover (DE); Fischer, Markus, 30823 Garbsen (DE)
(74) Vertreter: Finger, Karsten

(56) Entgegenhaltungen:
- EP-A1- 0 305 617
- EP-A1- 1 676 727
- DE-A1- 4 444 970
- JP-A- 6 166 304

## Beschreibung

Die Erfindung betrifft einen Fahrzeugluftreifen mit einem profilierten Laufstreifen mit radial erhabenen, durch Rillen voneinander getrennten Profilblockelementen, welche in radialer Richtung R nach außen durch eine die Bodenkontaktoberfläche des Profilblockelementes bildende radial äußere Oberfläche begrenzt wird.

Derartige Fahrzeugluftreifen sind bekannt. Beim rotierenden Fahrzeugluftreifen schlagen die Profilblockelemente mit ihren in Drehrichtung vorlaufenden Profilblockelementkanten beim Durchlaufen des Reifenlatsches auf der Straßenoberfläche auf. Durch diesen Aufschlag der Profilblockelementkanten entstehen Geräusche, welche die Gesamtgeräuschemission des Fahrzeugluftreifens erhöhen. Es sind Fahrzeugluftreifen bekannt, bei denen Profilblockelemente in ihren Querschnittsflächen ballig ausgebildet sind, d.h. ihre radial äußere Oberfläche ist in den Querschnittsebenen mit konvexem Konturverlauf ausgebildet. Durch die in den die Reifenachse beinhaltenden Querschnittsebenen ausgebildete ballige Form wird beim Abrollen auf der Straßenoberfläche Wasser schneller und besser zu den Rillen hin verdrängt. Die Balligkeit ermöglicht darüber hinaus einen vergleichmäßigten Bodenaufstandsdruck im Bereich des Profilblockelements und hierdurch verbesserte Bremseigenschaften. Durch die Ausbildung der Balligkeit werden die Profilblockelemente jedoch auch zusätzlich im Bereich der Querkanten versteift. Es hat sich gezeigt, dass die hierdurch bewirkte Versteifung zusätzlich die Geräuschbildung beim Aufschlagen der Profilblockelementkante auf die Straßenoberfläche verstärkt, wodurch die Geräuschemission erhöht wird.

Aus der EP 1 676 727 A1 ist ein Fahrzeugluftreifen mit Profilblockelementen bekannt, deren zu Rillen gerichteten Flanken deformiert ausgebildet sind.

Aus der JP 6 166 304 A ist ein Fahrzeugluftreifen mit Profilblockelementen bekannt, welche in radialer Richtung nach außen durch eine die Bodenkontaktoberfläche des Profilblockelementes bildende radial äußere Oberfläche begrenzt wird, die in ihren senkrecht zur Reifenachse ausgebildeten Querschnittsebenen mit einer konvex gekrümmten Kontur dieser radial äußeren Oberfläche ausgebildet ist.

Dokument DE 4444970 zeigt einen Fahrzeugluftreifen gemäß dem Oberbegriff von Anspruch 1.

Der Erfindung liegt die Aufgabe zugrunde mit einfachen Mitteln bei einem Fahrzeugluftreifen mit einem profilierten Laufstreifen mit radial erhabenen, durch Rillen voneinander getrennten Profilblockelementen, welche in radialer Richtung R nach außen durch eine die Bodenkontaktoberfläche des Profilblockelementes bildende radial äußere Oberfläche begrenzt wird, eine gute Wasserverdrängung bei vergleichmäßigtem Bodenaufstandsdruck mit reduzierter Geräuschentwicklung zu ermöglichen.

Die Aufgabe wird erfindungsgemäß durch die Ausbildung eines Fahrzeugluftreifens mit einem profilierten Laufstreifen mit radial erhabenen, durch Rillen voneinander getrennten Profilblockelementen, welche in radialer Richtung R nach außen durch eine die Bodenkontaktoberfläche des Profilblockelementes bildende radial äußere Oberfläche begrenzt wird, gemäß den Merkmalen von Anspruch 1 gelöst, bei dem die Profilblockelemente in ihren die Reifenachse aufweisenden Querschnittsebenen mit einer konvex gekrümmten Kontur dieser radial äußeren Oberfläche und in ihren senkrecht zur Reifenachse ausgebildeten Querschnittsebenen mit einer konkav gekrümmten Kontur dieser radial äußeren Oberfläche ausgebildet sind.

Durch diese Ausbildung ist das Profilblockelement in seinen Querschnittsebenen senkrecht zur Umfangsrichtung mit einer Balligkeit ausgebildet. Wasser wird durch die Balligkeit verstärkt und schnell aus dem Bereich des Bodenkontakts des Profilblockelementes beim Durchlaufen des Reifenlatsches verdrängt. Der Bodenaufstandsdruck des Profilblockelementes beim Durchlaufen des Reifenlatsches ist vergleichmäßigt. Alle wesentlichen Vorteile einer balligen Struktur in Querschnittsebenen senkrecht zur Umfangsrichtung können umgesetzt werden. Es hat sich dabei gezeigt, dass durch die konkav gekrümmte Kontur in den senkrecht zur Reifenachse ausgebildeten Querschnittsebenen trotz Nutzung der Vorteile der Balligkeit die aufschlagenden Kanten in ihrer Steifigkeit in Umfangsrichtung merklich reduziert werden und die Geräuschbildung beim Aufschlagen der Kante hierdurch reduziert wird.

Besonders vorteilhaft ist die Ausbildung eines Fahrzeugluftreifens gemäß den Merkmalen von Anspruch 2, bei dem die Profilblockelemente in axialer Richtung A des Reifens zu beiden Seiten hin jeweils durch eine Umfangsrille und in Umfangsrichtung U des Reifens zu beiden Seiten hin jeweils durch eine Querrille voneinander getrennt sind, wobei die zum Profilblockelement gerichtete Rillenwand der Umfangsrillen jeweils eine der beiden das Profilblockelement in axialer Richtung begrenzenden Blockelementflanken und die zum Profilblockelement gerichtete Rillenwand der Querrillen jeweils eine der beiden das Profilblockelement in Umfangsrichtung begrenzenden Blockelementflanken bilden.

Besonders vorteilhaft ist die Ausbildung eines Fahrzeugluftreifens gemäß den Merkmalen von Anspruch 3, bei dem die in Drehrichtung V des Fahrzeugreifens bei Vorwärtsfahrt dem Profilblockelement vorgeordnete Blockelementflanke des Profilblockelementes mit der radial äußeren Oberfläche eine erste Schnittkante und die in Drehrichtung V des Fahrzeugreifens bei Vorwärtsfahrt dem Profilblockelement nachgeordnete Blockelementflanke des Profilblockelementes mit der radial äußeren Oberfläche eine zweite Schnittkante bildet, bei dem die zur einen axialen Seite des Profilblockelementes das Profilblockelement begrenzende Profilblockelementflanke mit der radial äußeren Oberfläche eine dritte Schnittkante und die zur anderen axialen Seite des Profilblockelementes das Profilblockelement begrenzende Profilblockelementflanke mit der radial äußeren Oberfläche eine vierte Schnittkante bildet, bei dem die erste Schnittkante und die dritte Schnittkante sich in einem Punkt A, die erste Schnittkante und die vierte Schnittkante sich in einem Punkt B, die zweite Schnittkante und die vierte Schnittkante sich in einem Punkt C und die zweite und die dritte Schnittkante sich in einem Punkt D schneiden, wobei die Punkte A,B,C und D in einer gemeinsamen Ebene ABCD liegen, bei dem die erste Schnittkante sich in ihrem Verlauf zwischen den Punkten A und B in radialer Richtung R nach außen bis in einen maximalen Abstand h₁ von der Ebene ABCD mit 0,3mm≤h₁≤1mm und die zweite Schnittkante sich in ihrem Verlauf zwischen den Punkten C und D in radialer Richtung R nach außen bis in einen maximalen Abstand h₂ von der Ebene ABCD mit 0,3mm≤h₂≤1mm erstreckt und bei dem die dritte Schnittkante sich in ihrem Verlauf zwischen den Punkten A und D in radialer Richtung R nach innen bis in einen maximalen Abstand h₃ von der Ebene ABCD mit 0,3mm≤h₃≤1mm und die vierte Schnittkante sich in ihrem Verlauf zwischen den Punkten B und C in radialer Richtung R nach innen bis in einen maximalen Abstand h₄ von der Ebene ABCD mit 0,3mm≤h₄≤1mm erstreckt. Hierdurch kann bei größtmöglicher bodenkontaktfläche besonders zuverlässig die Entstehung von Geräuschimpuls reduziert werden.

Besonders vorteilhaft zur Erzielung einer optimalen Bodendruckverteilung bei weiter verbesserter Wasserverdrängung unterhalb des Profilblockes beim Durchlaufen des Reifenlatsches ist die Ausbildung eines Fahrzeugluftreifens gemäß den Merkmalen von Anspruch 4, wobei die Abständ h₃ und h₄ mit h₃ = h₄ ausgebildet sind.

Besonders vorteilhaft ist die Ausbildung eines Fahrzeugluftreifens gemäß den Merkmalen von Anspruch 5, wobei die Abständ h₁ und h₂ mit h₁ ≥ h₂ ausgebildet sind. Die Ausbildung ermöglicht in einfacher Weise eine besonders gute Geräuschreduktion bei guter Wasserverdrängung. Die Ausbildung mit h₁ = h₂ ist besonders vorteilhaft bei asymmetrischen, für beide Drehrichtungen einsetzbaren Laufstreifenprofilen. Dabei kann in beiden Drehrichtungen eine optimale Geräuschreduktion umgesetzt werden. Die Ausbildung mit h₁ > h₂ ist besonders vorteilhaft bei drehrichtungsgebundenen Lauftreifenprofilen, bei denen hierdurch ein besonders ausgeprägtes Dämpfungsverhalten beim Aufschlagen der vorderen Kante bei zusätzlich reduzierten geräuschbildenden Ausschnappeffekten der hinteren Kante des Profilblockelementes umgesetzt werden kann.

Besonders vorteilhaft ist die Ausbildung eines Fahrzeugluftreifens gemäß den Merkmalen von Anspruch 6, bei dem b₁ den in axialer Richtung A des Fahrzeugluftreifens gemessenen Abstand zwischen den Punkten A und B angibt und die erste Schnittkante ihren maximalen Abstand h₁ von der Ebene ABCD in einer axialen Position im Abstand a₁ =(b₁/2) von Punkt A aufweist und bei dem b₂ den in axialer Richtung A des Fahrzeugluftreifens gemessenen Abstand zwischen den Punkten D und C angibt und die zweite Schnittkante ihren maximalen Abstand h₂ von der Ebene ABCD in einer axialen Position im Abstand a₂ =(b₂/2) von Punkt D aufweist. Dies ermöglicht eine besonders gleichmäßige Balligkeit über die Umfangsertreckung des Profilblockelementes hinweg. Dies begünstigt die Erzielung einer verbesserten Wasserverdrängung unterhalb des Profilblockes beim Durchlaufen des Reifenlatsches.

Besonders vorteilhaft ist die Ausbildung eines Fahrzeugluftreifens gemäß den Merkmalen von Anspruch 7, bei dem b₃ den in Umfangsrichtung U des Fahrzeugluftreifens gemessenen Abstand zwischen den Punkten A und D angibt und die dritte Schnittkante mit ihrem maximalen Abstand h₃ von der Ebene ABCD in einer Umfangspositon im Abstand a₃ von Punkt A mit a₃ = (b₃/2) ausgebildet ist und bei dem b₄ den in Umfangsrichtung U des Fahrzeugluftreifens gemessenen Abstand zwischen den Punkten B und C angibt und die vierte Schnittkante mit ihrem maximalen Abstand h₄ von der Ebene ABCD in einer Umfangspositon im Abstand a₄ von Punkt B mit a₄ = (b₄/2) ausgebildet ist. Bei Nicht-Richtungsgebundenen, für beide Drehrichtungen einsetzbaren Laufstreifenprofilen kann in beide Drehrichtungen eine optimale Geräuschreduktion umgesetzt werden.

Besonders vorteilhaft ist die Ausbildung eines Fahrzeugluftreifens gemäß den Merkmalen von Anspruch 8, wobei die konvex gekrümmten Kontur der radial äußeren Oberfläche eine kreissegmentförmige Kontur ist.

Besonders vorteilhaft ist die Ausbildung eines Fahrzeugluftreifens gemäß den Merkmalen von Anspruch 9, wobei die konkav gekrümmten Kontur der radial äußeren Oberfläche eine kreissegmentförmige Kontur ist.

Besonders vorteilhaft ist die Ausbildung eines Fahrzeugluftreifens gemäß den Merkmalen von Anspruch 10, bei dem die Profilblockelemente Profilblockelemente einer Profilbockreihe sind.

Die Erfindung wird im Folgenden an Hand der in den Figuren 1 bis 5 dargestellten Ausführungsbeispiele näher erläutert. Hierin zeigen
- Fig.1: einen Umfangsabschnitt eines Laufstreifenprofilausschnitts mit Darstellung einer Profilblockelementreihe in perspektivischer Darstellung,
- Fig.2: eine Darstellung eines Profilblockelements der in Fig. dargestellten Profilblockelementreihe in perspektivischer Darstellung,
- Fig.3: eine Darstellung des Profilblockelements von Fig.2 in Schnittdarstellung gemäß Schnitt III-III von Fig.2 zur Darstellung einer in axialer Richtung A des Fahrzeugluftreifens gerichteten Seitenansicht des Profilblockelements,
- Fig.4: das Profilblockelement von Fig.2 in Schnittdarstellung gemäß Schnitt IV-IV von Fig.2, bei der die Schnittebene die Reifenachse beinhaltet und eine in Umfangsrichtung gerichtete Ansicht des Profilblockelementes darstellt und
- Fig.5: das Profilblockelement von Fig.2 in Schnittdarstellung gemäß Schnitt V-V von Fig.2, wobei die Querschnittsebene die Reifenachse beinhaltet.

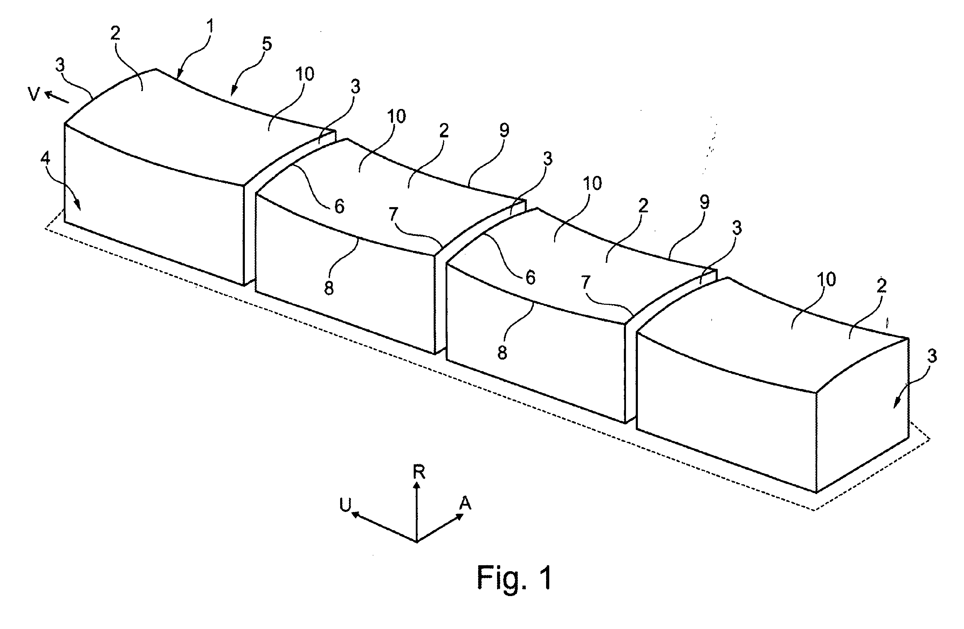

Fig. 1 zeigt eine in Umfangsrichtung U eines Fahrzeugluftreifens ausgerichtete Profilblockreihe 1, welche aus in Umfangsrichtung U hintereinander angeordneten radial erhabenen und jeweils durch Querrillen 3 in Umfangsrichtung U voneinander beabstandeten Profilblockelementen 2 ausgebildet ist. Die Profilblockreihe 1 ist in axialer Richtung A des Fahrzeugluftreifens zur einen Seite hin durch eine in Umfangsrichtung U ausgerichtete und über den gesamten Umfang des Fahrzeugluftreifens erstreckte Umfangsrille 4 und zur anderen Seite hin durch eine in Umfangsrichtung U ausgerichtete und über den gesamten Umfang des Fahrzeugluftreifens erstreckte Umfangsrille 5 begrenzt. In Fig. 1 ist die Drehrichtung des Fahrzeugluftreifens bei Vorwärtsfahrt mit dem in Umfangsrichtung gerichteten Pfeil V angegeben.

Die Umfangsrillen 4 und 5 sowie die Querrillen 3 sind jeweils in radialer Richtung R des Fahrzeugluftreifens nach innen durch einen Rillengrund und beiderseits ihres Rillengrundes jeweils durch eine Rillenwand, welche sich in radialer Richtung ausgehend vom Rillengrund nach außen erstreckt, begrenzt.

Die Profilblockelemente 2 sind in radialer Richtung R nach außen jeweils durch eine die Bodenkontaktoberfläche bildende radial äußere Oberfläche 10 begrenzt.

Die die Umfangsrille 4 zur Profilblockreihe 1 hin begrenzende Rillenwand bildet jeweils die die Profilblockelemente 2 der Profilblockreihe 1 zur Umfangsrille 4 hin begrenzenden Profilblockelementflanken, welche sich in radialer Richtung R ausgehend vom Rillengrund bis zu der radial äußeren Oberfläche 10 des jeweiligen Profilblockelementes 2 erstreckt und die radial äußere Oberfläche 10 in einer eine Schnittkante bildenden Schnittkonturlinie 8 schneidet. Die die Umfangsrille 5 zur Profilblockreihe 1 hin begrenzende Rillenwand bildet jeweils die die Profilblockelemente 2 der Profilblockreihe 1 zur Umfangsrille 5 hin begrenzenden Profilblockelementflanken, welche sich in radialer Richtung R ausgehend vom Rillengrund bis zu der radial äußeren Oberfläche 10 des jeweiligen Profilblockelementes 2 erstreckt und die radial äußere Oberfläche 10 in einer eine Schnittkante bildenden Schnittkonturlinie 9 schneidet.

Die Querrillen 3 erstrecken sich mit ihren Rillenwänden jeweils ausgehend vom Rillengrund nach radial außen. Dabei bildet die in Drehrichtung V bei Vorwärtsfahrt der Querrille vorgeordnete Rillenwand jeweils die zur Querrille 3 hin weisende Rillenflanke des der Querrille vorgeordneten Profilblockelementes 2 und somit die diesem Profilblockelement 2 in Drehrichtung V nachgeordnete Rillenflanke. Diese dem Profilblockelement 2 in Drehrichtung V nachgeordnete Rillenflanke erstreckt sich ausgehend vom Rillengrund der Querrille 3 nach radial außen bis zur radial äußeren Oberfläche 10 und schneidet diese in einer eine Schnittkante bildenden Schnittkonturlinie 7. Die in Drehrichtung V bei Vorwärtsfahrt der Querrille nachgeordnete Rillenwand bildet jeweils die zur Querrille 3 hin weisende Rillenflanke des der Querrille in Drehrichtung V nachgeordneten Profilblockelementes 2 und somit die diesem Profilblockelement 2 in Drehrichtung V vorgeordnete Rillenflanke. Diese dem Profilblockelement 2 in Drehrichtung V vorgeordnete Rillenflanke erstreckt sich ausgehend vom Rillengrund der Querrille 3 nach radial außen bis zur radial äußeren Oberfläche 10 und schneidet diese in einer eine Schnittkante bildenden Schnittkonturlinie 6.

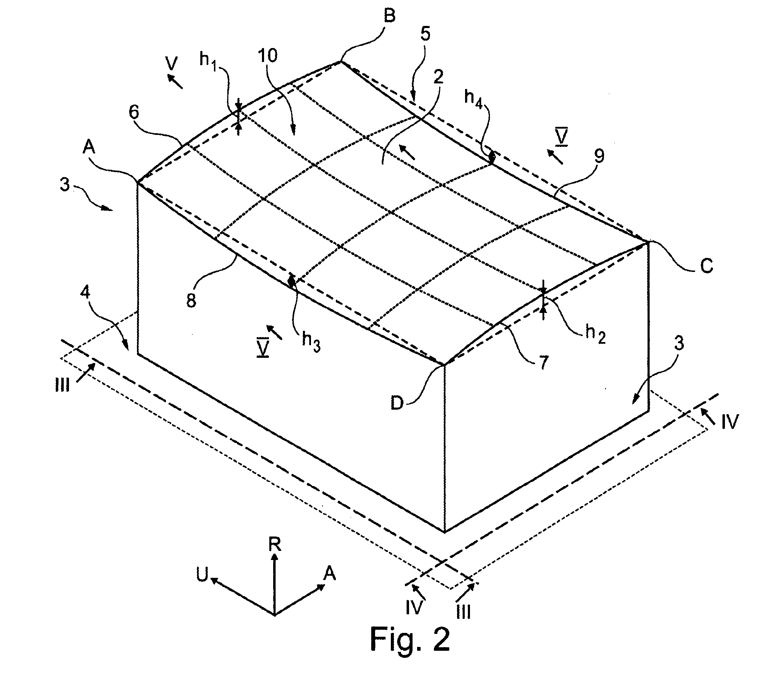

Wie in den Figuren 2 bis 4 dargestellt ist, schneiden sich die Schnittkonturlinien 6 und 8 in einem Schnittpunkt A, die Schnittkonturlinien 6 und 9 in einem Schnittpunkt B, die Schnittkonturlinien 9 und 7 in einem Schnittpunkt C und die Schnittkonturlinien 7 und 8 in einem Schnittpunkt D in der radial äußeren Oberfläche 10. Die Punkte A, B, C, D liegen in einer gemeinsamen Ebene ABCD.

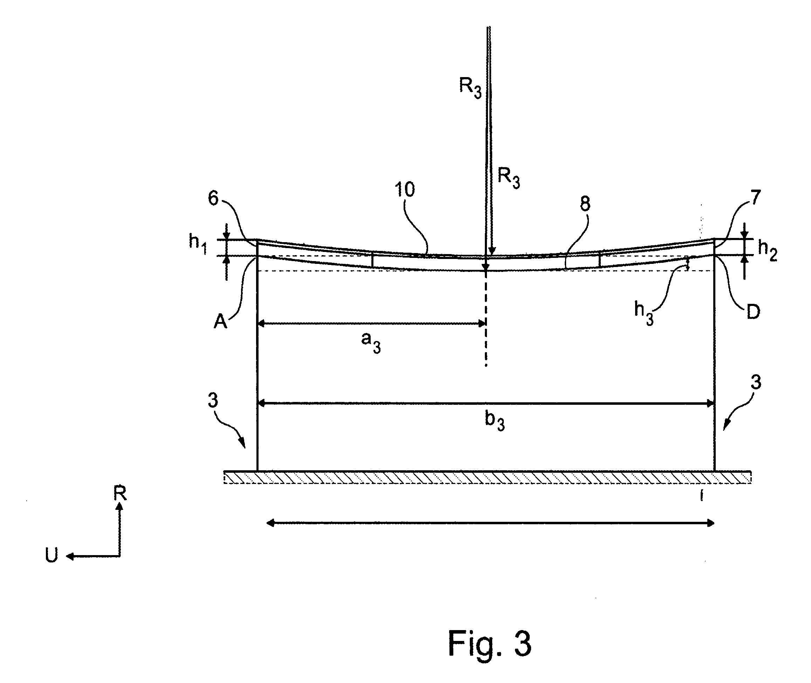

Wie in den Figuren 2 und 3 dargestellt ist, ist die radial äußere Oberfläche 10 in allen Querschnittebenen senkrecht zur Reifenachse jeweils mit einer konkav gekrümmten Konturlinie ausgebildet. Zum leichteren Verständnis sind hierzu in Fig. 2 neben den Schnittkonturlinien 8 und 9 noch drei weitere zwischen diesen beiden Schnittkonturlinien 8 und 9 ausgebildete Konturlinien eingezeichnet. Die konkave Krümmung ist in einem Ausführungsbeispiel eine kreissegmentförmige Krümmung mit einem Krümmungsradius R₃ und einem radial außerhalb der Oberfläche 10 in Umfangsrichtung U mittig zwischen den Konturlinien 6 und 7 ausgebildeten Krümmungsmittelpunkt.

Wie in den Figuren 2, 4 und 5 dargestellt ist, ist die radial äußere Oberfläche 10 in allen die Reifenachse aufweisenden Querschnittebenen mit einer konvex gekrümmten Konturlinie ausgebildet. Zum leichteren Verständnis sind hierzu in Fig. 2 neben den Schnittkonturlinien 6 und 7 noch drei weitere zwischen diesen beiden Schnittkonturlinien 6 und 7 ausgebildete Konturlinien eingezeichnet. Die konvexe Krümmung ist in einem Ausführungsbeispiel eine kreissegmentförmige Krümmung mit einem Krümmungsradius R₂ und einem auf der radialen Innenseite der Oberfläche 10 ausgebildeten Krümmungsmittelpunkt. Dieser Krümmungsmittelpunkt befindet sich in axialer Richtung A des Fahrzeugluftreifens mittig zwischen den Schnittkonturlinien 8 und 9.

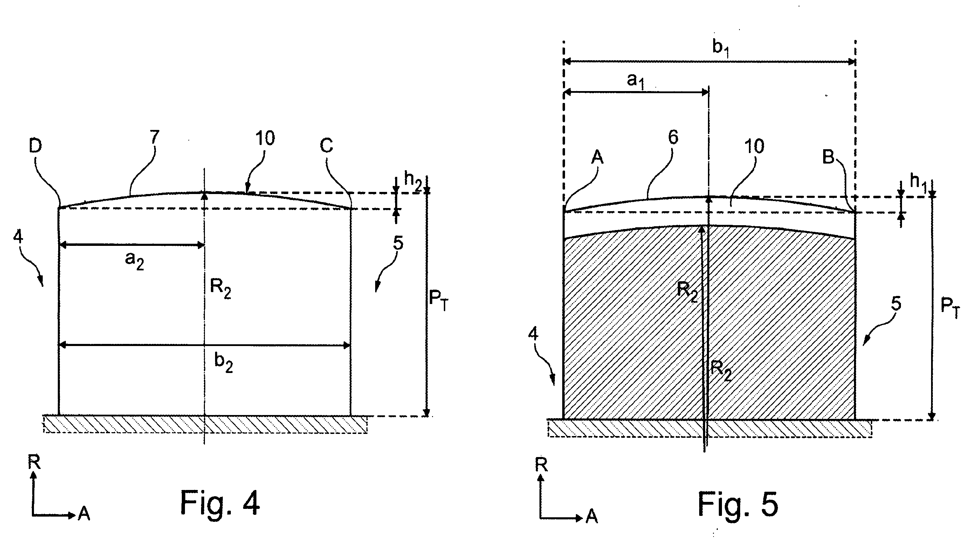

Wie in Fig.5 dargestellt ist, erstreckt sich die Schnittkonturlinie 6 in ihrem zwischen den Punkten A und B ausgebildeten Verlauf jeweils radial oberhalb der Ebene ABCD und nimmt jeweils ausgehend von den Punkten A bzw. B nach innen hin stetig zu, bis sie ihren maximalen Abstand h₂₁ von der Ebene ABCD erreicht. Diese Position des maximalen Abstands h₁ erreicht sie in einem axialen Abstand a₁ vom Punkt A mit a₁ = (b₁ /2), wobei b₁ den in axialer Richtung A des Fahrzeugluftreifens gemessenen Abstand zwischen den Punkten A und B angibt.

Ebenso erstreckt sich, wie in Fig. 4 dargestellt ist, die Schnittkonturlinie 7 in ihrem zwischen den Punkten D und C ausgebildeten Verlauf jeweils radial oberhalb der Ebene ABCD und nimmt jeweils ausgehend von den Punkten D bzw. C nach innen hin stetig zu, bis sie ihren maximalen Abstand h₂ von der Ebene ABCD erreicht. Diese Position des maximalen Abstandes h₂ erreicht sie im Abstand a₂ vom Punkt D mit a₂ = (b₂ /2), wobei b₂ den in axialer Richtung A des Fahrzeugluftreifens gemessenen Abstand zwischen den Punkten D und C angibt.

Wie in Fig. 3 und Fig.2 dargestellt ist, erstreckt sich die Schnittkonturlinie 8 in ihrem zwischen den Punkten A und D ausgebildeten Verlauf jeweils radial unterhalb der Ebene ABCD, und nimmt jeweils ausgehend von den Punkten A bzw. D nach innen hin stetig zu, bis sie ihren maximalen Abstand h₃ von der Ebene ABCD erreicht. Diese Position des maximalen Abstandes h₃ erreicht sie im in Umfangsrichtung U gemessenen Abstand a₃ vom Punkt A mit a₃ = (b₃ /2), wobei b₃ den in Umfangsrichtung U des Fahrzeugluftreifens gemessenen Abstand zwischen den Punkten A und D angibt.

Ebenso erstreckt sich die Schnittkonturlinie 9 in ihrem zwischen den Punkten B und C ausgebildeten Verlauf jeweils radial unterhalb der Ebene ABCD, und nimmt jeweils ausgehend von den Punkten B bzw. C nach innen hin stetig zu, bis sie ihren maximalen Abstand h₄ von der Ebene ABCD erreicht. Diese Position des maximalen Abstandes h₄ erreicht sie im in Umfangsrichtung U gemessenen Abstand a₄ vom Punkt B mit a₄ = (b₄/2), wobei b₄ den in Umfangsrichtung U des Fahrzeugluftreifens gemessenen Abstand zwischen den Punkten B und C angibt.

Die maximalen Abstände h₁, h₂, h₃, h₄ sind dabei mit 0,3mm ≤ h₁≤ 1mm,
mit 0,3mm ≤ h₂ ≤ 1mm, mit 0,3mm ≤ h₃ ≤ 1mm und mit 0,3 mm ≤ h₄ ≤ 1mm ausgebildet.

Im dargestellten Ausführungsbeispiel ist h₃ = h₄ = 0,5 mm und h₁ = h₂ = 0,6 mm gewählt.

In einem dargestellten Ausführungsbeispiel ist b₃ = b₄ und b₁ = b₂ gewählt.

In den dargestellten Ausführungsbeispielen liegen die Krümmungsmittelpunkte der Radien R₂ der konvexen Krümmung eines Profilblockelementes 2 jeweils in einer gemeinsamen Schnittebene, welche sich senkrecht auf der Drehachse des Reifens befindet und im Abstand a₁ vom Punkt A ausgebildet ist.

In den dargestellten Ausführungsbeispielen befinden sich die Krümmungsmittelpunkte der konkaven Krümmung mit den Krümmungsradien R₃ eines Profilblockelementes 2 jeweils in einer gemeinsamen Ebene, die die Reifenachse beinhaltet und im Abstand a₃ zum Punkt A ausgebildet ist.

In einem anderen, nicht dargestellten Ausführungsbeispiel befinden sich die Krümmungsmittelpunkte der konkaven Krümmung mit den Krümmungsradien R₃ eines Profilblockelementes 2 in einer gemeinsamen die Reifenachse beinhaltenden Ebene, die zwischen dem Punkt D und der auf die Strecke AD gebildeten Mittelsenkrechten liegt. Bei dieser Ausführung ist in jeder axialen Position A des Profilblockelementes die in Drehrichtung V bei Vorwärtsfahrt dem Profilblockelement vorgeordnete Schnittkonturlinie 6 in einer höheren radialen Position ausgebildet als die Schnittkonturlinie 7.

### Bezugszeichenliste

### (Teil der Beschreibung)

- 1: Profilblockreihe
- 2: Profilblockelement
- 3: Querrille
- 4: Umfangsrille
- 5: Umfangsrille
- 6: Schnittlinie
- 7: Schnittlinie
- 8: Schnittlinie
- 9: Schnittlinie
- 10: Radial äußere Oberfläche

## Patentansprüche

1. Fahrzeugluftreifen mit einem profilierten Laufstreifen mit radial erhabenen, durch Rillen (3,4,5) voneinander getrennten Profilblockelementen (2), welche in radialer Richtung R nach außen durch eine die Bodenkontaktoberfläche des Profilblockelementes (2) bildende radial äußere Oberfläche (10) begrenzt wird, wobei die Profilblockelemente in ihren die Reifenachse aufweisenden Querschnittsebenen mit einer konvex gekrümmten Kontur dieser radial äußeren Oberfläche (10) und **dadurch gekennzeichnet, dass** die Profilblockelemente (2) in ihren senkrecht zur Reifenachse ausgebildeten Querschnittsebenen mit einer konkav gekrümmten Kontur dieser radial äußeren Oberfläche (10) ausgebildet sind.

2. Fahrzeugluftreifen gemäß den Merkmalen von Anspruch 1,
bei dem die Profilblockelemente (2) in axialer Richtung A des Reifens zu beiden Seiten hin jeweils durch eine Umfangsrille (4,5) und in Umfangsrichtung U des Reifens zu beiden Seiten hin jeweils durch eine Querrille (3) voneinander getrennt sind, wobei die zum Profilblockelement (2) gerichtete Rillenwand der Umfangsrillen (4,5) jeweils eine der beiden das Profilblockelement (2) in axialer Richtung A begrenzenden Blockelementflanken und die zum Profilblockelement (2) gerichtete Rillenwand der Querrillen (3) jeweils eine der beiden das Profilblockelement (2) in Umfangsrichtung U begrenzenden Blockelementflanken bilden.

3. Fahrzeugluftreifen gemäß den Merkmalen von Anspruch 2,
bei dem die in Drehrichtung V des Fahrzeugreifens bei Vorwärtsfahrt dem Profilblockelement vorgeordnete Blockelementflanke des Profilblockelementes (2) mit der radial äußeren Oberfläche (10) eine erste Schnittkante (6) und die in Drehrichtung V des Fahrzeugreifens bei Vorwärtsfahrt dem Profilblockelement nachgeordnete Blockelementflanke des Profilblockelementes (2) mit der radial äußeren Oberfläche (10) eine zweite Schnittkante (7) bildet,
bei dem die zur einen axialen Seite des Profilblockelementes (2) die das Profilblockelement (2) begrenzende Profilblockelementflanke mit der radial äußeren Oberfläche (10) eine dritte Schnittkante (8) und die zur anderen axialen Seite des Profilblockelementes (2) das Profilblockelement (2) begrenzende Profilblockelementflanke mit der radial äußeren Oberfläche (10) eine vierte Schnittkante (9) bildet,
bei dem die erste Schnittkante (6) und die dritte Schnittkante (8) sich in einem Punkt A, die erste Schnittkante (6) und die vierte Schnittkante (9) sich in einem Punkt B, die zweite Schnittkante (7) und die vierte Schnittkante (9) sich in einem Punkt C und die zweite Schnittkante (7) und die dritte Schnittkante (8) sich in einem Punkt D schneiden, wobei die Punkte A,B,C und D in einer gemeinsamen Ebene ABCD liegen,
bei dem die erste Schnittkante (6) sich in ihrem Verlauf zwischen den Punkten A und B sich in radialer Richtung R nach außen bis in einen maximalen Abstand h₁ von der Ebene ABCD mit 0,3mm≤ h₁≤1mm und die zweite Schnittkante (7) sich in ihrem Verlauf zwischen den Punkten C und D in radialer Richtung R nach außen bis in einen maximalen Abstand h₂ von der Ebene ABCD mit 0,3mm≤ h₂≤1mm erstreckt und bei dem die dritte Schnittkante (8) sich in ihrem Verlauf zwischen den Punkten A und D in radialer Richtung R nach innen bis in einen maximalen Abstand h₃ von der Ebene ABCD mit 0,3mm≤h₃≤1mm und die vierte Schnittkante (9) sich in ihrem Verlauf zwischen den Punkten B und C in radialer Richtung R nach innen bis in einen maximalen Abstand h₄ von der Ebene ABCD mit 0,3mm≤h₄≤1mm erstreckt.

4. Fahrzeugluftreifen gemäß den Merkmalen von Anspruch 3,
wobei die Abständ h₃ und h₄ mit h₃ = h₄ ausgebildet sind.

5. Fahrzeugluftreifen gemäß den Merkmalen von Anspruch 3 oder 4,
wobei die Abständ h₁ und h₂ mit h₁ ≥ h₂ ausgebildet sind.

6. Fahrzeugluftreifen gemäß den Merkmalen von einem der Ansprüche 3,4 oder 5, bei dem b₁ den in axialer Richtung A des Fahrzeugluftreifens gemessenen Abstand zwischen den Punkten A und B angibt und die erste Schnittkante (6) ihren maximalen Abstand h₁ von der Ebene ABCD in einer axialen Position im Abstand a₁ =(b₁/2) von Punkt A aufweist und
bei dem b₂ den in axialer Richtung A des Fahrzeugluftreifens gemessenen Abstand zwischen den Punkten D und C angibt und die zweite Schnittkante (7) ihren maximalen Abstand h₂ von der Ebene ABCD in einer axialen Position im Abstand a₂ =(b₂/2) von Punkt D aufweist.

7. Fahrzeugluftreifen gemäß den Merkmalen von einem der Ansprüche 3,4,5 oder 6, bei dem b₃ den in Umfangsrichtung U des Fahrzeugluftreifens gemessenen Abstand zwischen den Punkten A und D angibt und die dritte Schnittkante (8) mit ihrem maximalen Abstand h₃ von der Ebene ABCD in einer Umfangspositon im Abstand a₃ von Punkt A mit a₃ = (b₃/2) ausgebildet ist und
bei dem b₄ den in Umfangsrichtung U des Fahrzeugluftreifens gemessenen Abstand zwischen den Punkten B und C angibt und die vierte Schnittkante (9) mit ihrem maximalen Abstand h₄ von der Ebene ABCD in einer Umfangspositon im Abstand a₄ von Punkt B mit a₄ = (b₄/2) ausgebildet ist.

8. Fahrzeugluftreifen gemäß den Merkmalen von einem oder mehreren der vorangegangenen Ansprüche,
wobei die konvex gekrümmten Kontur der radial äußeren Oberfläche (10) eine kreissegmentförmige Kontur ist.

9. Fahrzeugluftreifen gemäß den Merkmalen von einem oder mehreren der vorangegangenen Ansprüche,
wobei die konkav gekrümmten Kontur der radial äußeren Oberfläche (10) eine kreissegmentförmige Kontur ist.

10. Fahrzeugluftreifen gemäß den Merkmalen von einem oder mehreren der vorangegangenen Ansprüche,
bei dem die Profilblockelemente (2) Profilblockelemente einer Profilbockreihe (1) sind.

## Claims

1. Pneumatic vehicle tyre with a profiled tread having radially raised profile block elements (2), which are separated from one another by grooves (3, 4, 5) and are outwardly delimited in the radial direction R by a radially outer surface (10) forming the ground contact surface of the profile block element (2), wherein the profile block elements are formed in their cross-sectional planes comprising the tyre axis by a convexly curved contour of this radially outer surface (10) and **characterized in that** the profile block elements (2) are formed in their cross-sectional planes formed perpendicularly to the tyre axis by a concavely curved contour of this radially outer surface (10).

2. Pneumatic vehicle tyre according to the features of Claim 1,
in which the profile block elements (2) are separated from one another on each of both sides in the axial direction A of the tyre by a circumferential groove (4, 5) and on each of both sides in the circumferential direction U of the tyre by a transverse groove (3), wherein the groove wall of the circumferential grooves (4, 5) that is directed towards the profile block element (2) respectively forms one of the two block element flanks delimiting the profile block element (2) in the axial direction A and the groove wall of the transverse grooves (3) that is directed towards the profile block element (2) respectively forms one of the two block element flanks delimiting the profile block element (2) in the circumferential direction U.

3. Pneumatic vehicle tyre according to the features of Claim 2,
in which the block element flank of the profile block element (2) that is leading the profile block element in the direction of rotation V of the vehicle tyre during forward travel forms a first intersecting edge (6) with the radially outer surface (10) and the block element flank of the profile block element (2) that is trailing the profile block element in the direction of rotation V of the vehicle tyre during forward travel forms a second intersecting edge (7) with the radially outer surface (10),
in which the profile block element flank delimiting the profile block element (2) towards one axial side of the profile block element (2) forms a third intersecting edge (8) with the radially outer surface (10) and the profile block element flank delimiting the profile block element (2) towards the other axial side of the profile block element (2) forms a fourth intersecting edge (9) with the radially outer surface (10),
in which the first intersecting edge (6) and the third intersecting edge (8) intersect at a point A, the first intersecting edge (6) and the fourth intersecting edge (9) intersect at a point B, the second intersecting edge (7) and the fourth intersecting edge (9) intersect at a point C and the second intersecting edge (7) and the third intersecting edge (8) intersect at a point D, the points A, B, C and D lying in a common plane ABCD, in which the first intersecting edge (6) extends in its path between points A and B outwardly in the radial direction R up to a maximum distance h₁ from the plane ABCD, with 0.3 mm ≤ h₁ ≤ 1 mm, and the second intersecting edge (7) extends in its path between points C and D outwardly in the radial direction R up to a maximum distance h₂ from the plane ABCD, with 0.3 mm ≤ h₂ ≤ 1 mm, and in which the third intersecting edge (8) extends in its path between points A and D inwardly in the radial direction R up to a maximum distance h₃ from the plane ABCD, with 0.3 mm ≤ h₃ ≤ 1 mm, and the fourth intersecting edge (9) extends in its path between points B and C inwardly in the radial direction R up to a maximum distance h₄ from the plane ABCD, with 0.3 mm ≤ h₄ ≤ 1 mm.

4. Pneumatic vehicle tyre according to the features of Claim 3,
wherein the distances h₃ and h₄ are formed with h₃ = h₄.

5. Pneumatic vehicle tyre according to the features of Claim 3 or 4,
wherein the distances h₁ and h₂ are formed with h₁ ≥ h₂.

6. Pneumatic vehicle tyre according to the features of one of Claims 3, 4 and 5,
in which b₁ indicates the distance, measured in the axial direction A of the pneumatic vehicle tyre, between points A and B and the first intersecting edge (6) has its maximum distance h₁ from the plane ABCD at an axial position at the distance a₁ = (b₁/2) from point A and
in which b₂ indicates the distance, measured in the axial direction A of the pneumatic vehicle tyre, between points D and C and the second intersecting edge (7) has its maximum distance h₂ from the plane ABCD at an axial position at the distance a₂ = (b₂/2) from point D.

7. Pneumatic vehicle tyre according to the features of one of Claims 3, 4, 5 and 6,
in which b₃ indicates the distance, measured in the circumferential direction U of the pneumatic vehicle tyre, between points A and D and the third intersecting edge (8) is formed with its maximum distance h₃ from the plane ABCD at a circumferential position at the distance a₃ from point A, with a₃ = (b₃/2), and
in which b₄ indicates the distance, measured in the circumferential direction U of the pneumatic vehicle tyre, between points B and C and the fourth intersecting edge (9) is formed with its maximum distance h₄ from the plane ABCD at a circumferential position at the distance a₄ from point B, with a₄ = (b₄/2).

8. Pneumatic vehicle tyre according to the features of one or more of the preceding claims,
wherein the convexly curved contour of the radially outer surface (10) is a contour in the form of a segment of a circle.

9. Pneumatic vehicle tyre according to the features of one or more of the preceding claims,
wherein the concavely curved contour of the radially outer surface (10) is a contour in the form of a segment of a circle.

10. Pneumatic vehicle tyre according to the features of one or more of the preceding claims,
in which the profile block elements (2) are profile block elements of a row of profile blocks (1).

## Revendications

1. Pneu de véhicule comprenant une bande de roulement profilée, avec des éléments de blocs profilés (2) rehaussés radialement, séparés les uns des autres par des gorges (3, 4, 5), lesquels sont limités dans la direction radiale R vers l'extérieur par une surface radialement extérieure (10) formant la surface de contact de fond de l'élément de bloc profilé (2), les éléments de blocs profilés étant réalisés dans leurs plans en section transversale présentant l'axe du pneu avec un contour de courbure convexe de cette surface (10) radialement extérieure et **caractérisé en ce que** les éléments de blocs profilés (2) sont réalisés dans leurs plans en section transversale réalisés perpendiculairement à l'axe du pneu avec un contour de courbure concave de cette surface (10) radialement extérieure.

2. Pneu de véhicule selon les caractéristiques de la revendication 1, dans lequel les éléments de blocs profilés (2) sont séparés les uns des autres dans la direction axiale A du pneu vers les deux côtés à chaque fois par une gorge périphérique (4, 5) et dans la direction périphérique U du pneu vers les deux côtés à chaque fois par une gorge transversale (3), la paroi de gorge des gorges périphériques (4, 5) orientée vers l'élément de bloc profilé (2) formant à chaque fois l'un des deux flancs d'élément de bloc limitant l'élément de bloc profilé (2) dans la direction axiale A et la paroi de gorge des gorges transversales (3) orientée vers l'élément de bloc profilé (2) formant à chaque fois l'un des deux flancs d'élément de bloc limitant l'élément de bloc profilé (2) dans la direction périphérique U.

3. Pneu de véhicule selon les caractéristiques de la revendication 2,
dans lequel le flanc d'élément de bloc de l'élément de, bloc profilé (2) disposé avant l'élément de bloc profilé dans le sens de rotation V du pneu de véhicule en marche avant forme avec la surface (10) radialement extérieure une première arête de coupe (6) et le flanc d'élément de bloc de l'élément de bloc profilé (2) disposé après l'élément de bloc profilé dans le sens de rotation V du pneu de véhicule en marche avant forme avec la surface (10) radialement extérieure une deuxième arête de coupe (7),
dans lequel le flanc d'élément de bloc profilé limitant l'élément de bloc profilé (2) vers un côté axial de l'élément de bloc profilé (2) forme avec la surface (10) radialement extérieure une troisième arête de coupe (8) et le flanc d'élément de bloc profilé limitant l'élément de bloc profilé (2) vers l'autre côté axial de l'élément de bloc profilé (2) forme avec la surface (10) radialement extérieure une quatrième arête de coupe (9),
dans lequel la première arête de coupe (6) et la troisième arête de coupe (8) s'intersectent en un point A, la première arête de coupe (6) et la quatrième arête de coupe (9) s'intersectent en un point B, la deuxième arête de coupe (7) et la quatrième arête de coupe (9) s'intersectent en un point C et la deuxième arête de coupe (7) et la troisième arête de coupe (8) s'intersectent en un point D, les points A, B, C et D étant situés dans un plan commun ABCD,
dans lequel la première arête de coupe (6) s'étend dans son étendue entre les points A et B dans la direction radiale R vers l'extérieur jusqu'à une distance maximale h₁ du plan ABCD, avec 0,3 mm ≤ h₁ ≤ 1 mm et la deuxième arête de coupe (7) s'étend dans son étendue entre les points C et D dans la direction radiale R vers l'extérieur jusqu'à une distance maximale h₂ du plan ABCD avec 0,3 mm ≤ h₂ ≤ 1 mm et
dans lequel la troisième arête de coupe (8) s'étend dans son étendue entre les points A et D dans la direction radiale R vers l'intérieur jusqu'à une distance maximale h₃ du plan ABCD avec 0,3 mm ≤ h₃ ≤ 1 mm et la quatrième arête de coupe (9) s'étend dans son étendue entre les points B et C dans la direction radiale R vers l'intérieur jusqu'à une distance maximale h₄ du plan ABCD avec 0,3 mm ≤ h₄ ≤ 1 mm.

4. Pneu de véhicule selon les caractéristiques de la revendication 3, dans lequel les distances h₃ et h₄ sont réalisées avec h₃ = h₄.

5. Pneu de véhicule selon les caractéristiques de la revendication 3 ou 4, dans lequel les distances h₁ et h₂ sont réalisées avec h₁ ≥ h₂.

6. Pneu de véhicule selon les caractéristiques de l'une quelconque des revendications 3, 4 ou 5, dans lequel b₁ indique la distance mesurée dans la direction axiale A du pneu de véhicule entre les points A et B et la première arête de coupe (6) présente sa distance maximale h₁ au plan ABCD dans une position axiale à la distance a₁ = (b₁/2) du point A et
dans lequel b₂ indique la distance mesurée dans la direction axiale A du pneu de véhicule entre les points D et C et la deuxième arête de coupe (7) présente sa distance maximale h₂ au plan ABCD dans une position axiale à la distance a₂ = (b₂/2) du point D.

7. Pneu de véhicule selon les caractéristiques de l'une quelconque des revendications 3, 4, 5 ou 6, dans lequel b₃ indique la distance mesurée dans la direction périphérique U du pneu de véhicule entre les points A et D et la troisième arête de coupe (8) est réalisée avec sa distance maximale h₃ au plan ABCD dans une position périphérique à la distance a₃ du point A avec a₃ = (b₃/2) et
dans lequel b₄ indique la distance mesurée dans la direction périphérique U du pneu de véhicule entre les points B et C et la quatrième arête de coupe (9) est réalisée avec sa distance maximale h₄ du plan ABCD dans une position périphérique à la distance a₄ du point B avec a₄ = (b₄/2).

8. Pneu de véhicule selon les caractéristiques d'une ou plusieurs des revendications précédentes,
dans lequel le contour de courbure convexe de la surface radialement extérieure (10) est un contour en forme de segment de cercle.

9. Pneu de véhicule selon les caractéristiques d'une ou plusieurs des revendications précédentes,
dans lequel le contour de courbure concave de la surface radialement extérieure (10) est un contour en forme de segment de cercle.

10. Pneu de véhicule selon les caractéristiques d'une ou plusieurs des revendications précédentes,
dans lequel les éléments de blocs profilés (2) sont des éléments de blocs profilés d'une rangée de blocs profilés (1).
